# EUROPEAN PATENT APPLICATION

(11) **EP 2 015 529 A1**
(43) Date of publication of application: **14.01.2009**
(21) Application number: 07740382.2
(22) Date of filing: 29.03.2007
(51) Int. Cl.: H04L 12/58, G06F 13/00

(54) **ELECTRONIC MAIL DELIVERY SYSTEM AND ELECTRONIC MAIL DELIVERY PROGRAM**

(30) Priority: 29.03.2006 JP 2006092012
(71) Applicant: NTT Communications Corp., Tokyo 100-8019 (JP); Nippon Telegraph & Telephone Corporation, Tokyo 163-8019 (JP)
(72) Inventor: KADOKAWA, Tomonori Nippon Telegr. & Teleph. East Corp., Shinjuku-ku, Tokyo 163-8019 (JP); HATORI, Takayuki Nippon Telegr. & Teleph. East Corp., Chiyoda-ku, Tokyo 100-8019 (JP); HUKUSHIGE, Mitsuhide NTT Comm. Corp., Shinjuku-ku, Tokyo 163-8019 (JP)
(74) Representative: HOFFMANN EITLE
(86) International application number: PCT/JP2007/056944
(87) International publication number: WO 2007/114286

(57) **Abstract**

A mail address acquiring section (423) acquires destination mail addresses one by one from received envelope information; a mail header processing section (424) deletes unnecessary destination mail addresses from a mail header; and an envelope generating section (425) generates envelope information for delivering mail data. In this way, it is possible to delete the unnecessary destination mail addresses from the mail header and to transmit the mail data individually to each of the destination mail addresses included in the envelope information. Accordingly, a sender of an electronic mail can transmit a broadcast mail without leaking mail addresses of others.

## Description

### TECHNICAL FIELD

The present invention relates to a technique for receiving and relaying an electronic mail.

### BACHGROUND ART

In recent years, enforcement of the personal information protection law has been raising consciousness about handling of personal information. Mail addresses for identifying individuals are also regarded as personal information, so that the handling of the personal information is the most important issue for business organizations. There are also business organizations setting up an in-house rule to prohibit the mail addresses of people other than a recipient from being displayed in To fields, Cc (carbon copy) fields, and the like in mail headers of broadcast mails (an electronic mail in which multiple recipient addresses are set).

Existing methods for preventing mail addresses of others from being displayed in a mail header includes a method in which an electronic-mail sender, himself/herself, copies a mail for each mail address and sends the mails separately, and a method of utilizing a Bcc (blind carbon copy) field in an electronic mail header. In addition, a method described in JP-A 2004-207785 has been known as a method of copying mail addresses listed in the To field of an electronic mail to individually send the electronic mail to each of the addresses. "HDE Customers Care" sold by Horizon Digital Enterprise, Inc. is known as a system for individually transmitting broadcast mails such as direct mails by using a dedicated server or the like. Meanwhile, "HDE Mail Filter" sold by Horizon Digital Enterprise, Inc. and "GUADIANWALL" sold by Canon System Solutions, Inc. are known as systems for checking contents of electronic mails at the time of relaying the electronic mails in order to prevent leakages of confidential information such as the personal information.

In the method of utilizing the Bcc field, however, mail addresses may be displayed in the mail header and thus leaked when a sender mistakenly writes down mail addresses in the To field or the Cc field, depending on a literacy state of the sender, or due to a human error or the like. Moreover, the method of copying and individually sending electronic mails manually by a sender is troublesome and often causes mistakes that destination addresses are wrongly set.

The technique described in JP-A 2004-207785 is configured to acquire the mail addresses listed in the mail header and to copy and send the electronic mail. Accordingly, this technique is not able to process a mail address written in the Bcc field which is to be deleted from the mail header in mid-course.

"HDE Customers Care" is suitable for sending a large number of broadcast mails such as direct e-mails or publishing an e-mail newsletter, but requires dedicated software for sending and does not allow a sender to send messages from a mailer usually used by the sender.

In order to avoid leakage of the confidential information, "HDE Mail Filter" or "GUADIANWALL" can perform processes such as canceling the relay of the electronic mail, and deleting the electronic mail, but cannot relay and send the electronic mail while deleting the confidential information from the contents of the electronic mail.

### DISCLOSURE OF THE INVENTION

The present invention has been made in view of the foregoing circumstances and an object thereof is to easily send a broadcast mail while preventing a leakage of mail addresses of others.

An electronic mail delivery system according to the present invention is characterized by including a first receiving section for receiving an envelope containing destination mail addresses and causing a first storage section to store the envelope, a second receiving section for receiving mail data containing a mail header corresponding to the envelope and causing a second storage section to store the data, an acquiring section for acquiring the destination mail addresses contained in the envelope respectively from the first storage section, a processing section for deleting, for each of the destination mail addresses acquired by the acquiring section, the destination mail addresses except the relevant destination mail address from the mail header of the mail data read from the second storage section and causing a third storage section to store the mail data, a generating section for generating, for each of the destination mail addresses acquired by the acquiring section, an envelope containing the relevant destination mail address so as to deliver the mail data individually and causing a fourth storage section to store the envelope, and a delivering section for reading the envelope from the fourth storage section as well as reading the mail data corresponding to the relevant destination mail address contained in the envelope from the third storage section and delivering the mail data on the basis of the envelope.

In the present invention, by providing the acquiring section for acquiring the destination mail addresses one-by-one from the received envelope, the processing section for deleting the destination mail addresses except the acquired mail address from the mail header, and the generating section for generating the envelope for a delivery to the acquired mail address, it is possible to send an electronic mail individually to each of the destination mail addresses contained in the envelope. In this way, the destination mail addresses other than the mail address targeted for the delivery are not described in the mail header of the electronic mail to be transmitted. Accordingly, it is possible to send a broadcast mail without causing leakages of the mail addresses of others.

The electronic mail delivery system described above is characterized by further including a fifth storage section for storing a deletion-exempt mail address from the mail header of the mail data as a deletion-exempt mail address, and characterized in that the processing section deletes a destination mail address other than the destination mail address acquired by the acquiring section and not corresponding to the deletion-exempt mail address read from the fifth storage section from the mail header.

In the present invention, by storing the deletion-exempt mail address in the fifth storage section and transmitting the mail data without the destination mail address corresponding to the deletion-exempt mail address being deleted from the mail header, it is possible to recognize a related party (the deletion-exempt mail address) to which the same electronic mail is transmitted.

The electronic mail delivery system described above is characterized by further including a sixth storage section for storing a mail address, to which the mail data are delivered without the mail header of the mail data being processed, as a processing-exempt mail address, and characterized in that the processing section does not process the mail header of the mail data read from the second storage section in the case where the destination mail address acquired by the acquiring section corresponds to the mail address no to be processed read from the sixth storage section.

In the present invention, it is possible to store the processing-exempt mail address in the sixth storage section and to deliver the electronic mail to the destination corresponding to the processing-exempt mail address without the mail header being processed. Accordingly, it is possible to determine to whom the electronic mail has been sent without reducing convenience.

The electronic mail delivery system described above is characterized in that the generating section generates the envelope containing the destination mail addresses collectively as delivery destinations in the case where the destination mail address acquired by the acquiring section corresponds to the processing-exempt mail addresses.

In the present invention, it is possible to reduce a load at the time of delivering the electronic mails by generating the envelope so as to deliver the mail data collectively to the processing-exempt mail addresses on which the mail header is not processed.

### BRIEF DESCRIPTION OF THE DRAWINGS

Fig. 1 is a block diagram showing a configuration of an electronic mail delivery system according to an embodiment of the present invention.
Fig. 2 is a block diagram showing a configuration of an individually transmitting section in the electronic mail delivery system.
Fig. 3 is a flowchart showing operations of the electronic mail delivery system in this embodiment.
Fig. 4 is a flowchart showing operations of the individually transmitting section in this embodiment.
Fig. 5 is an explanatory view showing an example of processing envelopes and mail headers by the electronic mail delivery system in this embodiment.

### BEST MODE FOR CARRYING OUT THE INVENTION

An embodiment of the present invention will be described below with reference to the accompanying drawings.

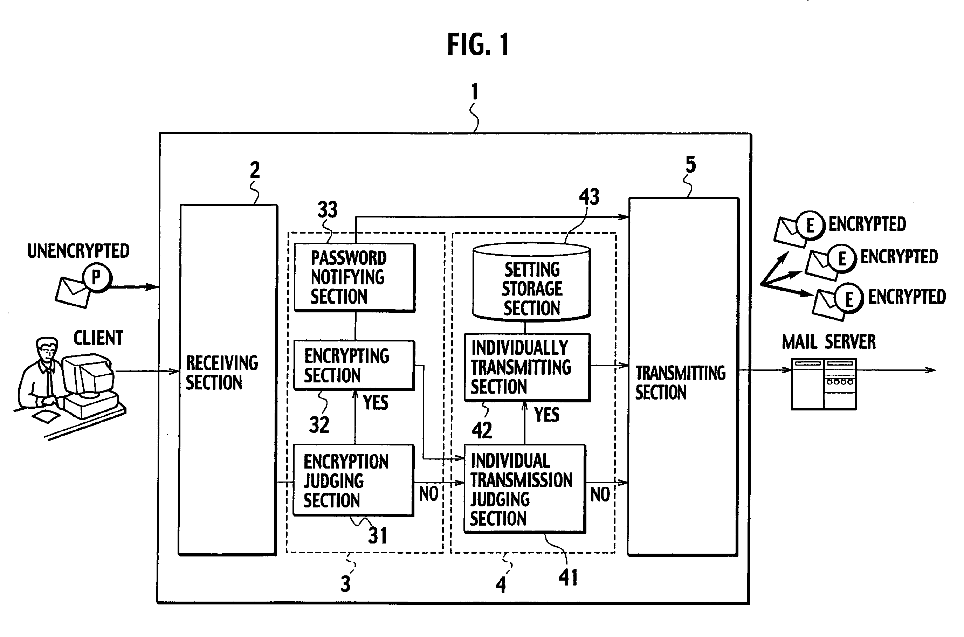

Fig. 1 is a block diagram showing a configuration of an electronic mail delivery system of this embodiment. An electronic mail delivery system 1 shown in the drawing includes a receiving section 2, an encryption processing section 3, a delivery processing section 4, and a transmitting section 5. The encryption processing section 3 includes an encryption judging section 31, an encrypting section 32, and a password notifying section 33. The delivery processing section 4 includes an individual transmission judging section 41, an individually transmitting section 42, and a setting storage section 43. Note that, the electronic mail delivery system 1 is basically configured in a computer and processes by the respective sections are executed by a program. This program can be recorded on a recording medium such as a CD-ROM, a magnetic disk, an optical disk or a semiconductor memory, or can be provided through a network. Now, outlines of the processes by the respective sections will be described below.

The receiving section 2 performs communications with a client by using SMTP (simple mail transfer protocol) and receives an electronic mail. The SMTP is known as a transmission protocol for electronic mails. In the SMTP, envelope information such as sender information (MAIL FROM) and destination information (RCPT TO) is transmitted from a client and thereafter mail data (DATA) including a mail header and a body text are transmitted. The mail data are delivered in accordance with the destination information (RCPT TO) included in the envelope information. As the client and the receiving section 2 performs communications by using the SMTP which is the typical electronic mail transmission protocol, a user can use a mailer usually used by the user. Upon receipt of the envelope information and the mail data, the receiving section 2 stores the envelope information and the mail data in a memory included in the receiving section 2.

The encryption judging section 31 acquires the envelope information and the mail data from the receiving section 2, and then judges whether or not a file attached to the electronic mail is supposed to be encrypted on the basis of the envelope information and the mail data thus acquired. The attached file is encoded into text data by using BASE64 or the like and is included in the body text of the mail data. When the attached file is to be encrypted, the encryption judging section 31 outputs the envelope information and the mail data to the encrypting section 32, or outputs the envelope information and the mail data to the individual transmission judging section 41 when the attached file is not to be encrypted. Here, when no file is attached to the electronic mail, the encryption judging section 31 outputs the envelope information and the mail data to the individual transmission judging section 41 as similar to the case of not performing encryption, since there is no object to be encrypted.

Meanwhile, when a given field is included in the mail header or when a predetermined dummy mail address is included in the destination information (RCPT TO), for example, the encryption judging section 31 can judge that the attached file is not to be encrypted. In this way, by allowing the encryption judging section 31 to judge encryption by using the mail header and the dummy mail address, the user can control whether to encrypt the attached file for each of the electronic mails to be transmitted.

The encrypting section 32 encrypts the attached file of the electronic mail and outputs the mail data including the envelope information and the encrypted attached file to the individual transmission judging section 41. Moreover, the encrypting section 32 outputs a password for decoding the encryption and the envelope information to the password notifying section 33.

The password notifying section 33 transmits the password required for decoding the encrypted attached file to the sender and the destination of the electronic mail as a password notification mail. The password notification mail is individually transmitted to mail addresses described in the sender (MAIL FROM) and the destination information (RCPT TO) in the envelope information.

The individual transmission judging section 41 judges whether to perform an individual transmission process to the received electronic mail. The judgment as to whether to perform the individual transmission process is conducted, for example, by checking whether the given field is included in the mail header, whether the predetermined dummy mail address is included in the destination information (RCPT TO), or the like.

When the individual transmission judging section 41 performs the individual transmission process, the envelope information and the mail data are outputted to the individually transmitting section 42. Meanwhile, when the individual transmission judging section 41 does not perform the individual transmission process, the envelope information and the mail data received by the individual transmission judging section 41 are outputted to the transmitting section 5. The transmitting section 5 transmits the electronic mail to an upstream mail server on the basis of the inputted envelope information and mail data.

The individually transmitting section 42 stores the inputted envelope information and mail data in the memory included in the individually transmitting section 42. Then, the individually transmitting section 42 acquires the mail addresses by dividing them one by one from the destination information (RCPT TO) included in the envelope information. When a mail address other than the acquired mail addresses is included in a To field or Cc field of the mail header, the individually transmitting section 42 deletes that address from the mail header and stores the mail header in the memory. Further, the individually transmitting section 42 generates envelope information that only includes the acquired mail addresses as the destination information (RCPT TO) and stores it in the memory. Thereafter, the individually transmitting section 42 reads the mail data with the processed mail header as well as the generated envelope information from the memory and outputs them to the transmitting section 5.

The setting storage section 43 stores processing-exempt mail addresses to which mail data are delivered without the mail header thereof being processed and deletion-exempt mail addresses that is not deleted from the mail header. The processing-exempt mail addresses and the deletion-exempt mail addresses can also be specified in a lump by specifying a domain. For example, when mail addresses of all employees of a company are registered, the domain of the company is specified in the setting storage section 43. The individually transmitting section 42 refers to the setting storage section 43 and acquires the processing-exempt mail addresses and the deletion-exempt mail addresses. When the mail address acquired from the envelope information corresponds to the processing-exempt mail address, the individually transmitting section 42 delivers the mail data without processing the mail header of the mail data. Meanwhile, when the individually transmitting section 42 attempts to delete destination mail addresses from the mail header, if a destination mail address that is attempted to be deleted corresponds to the deletion-exempt mail address, that destination mail address is not deleted from the mail header. In this embodiment, the processing-exempt mail addresses and the deletion-exempt mail addresses are stored as exempt mail addresses in a single set. However, the invention is not limited to this configuration and it is also possible to set up the processing-exempt mail addresses and the deletion-exempt mail addresses separately. In this way, concerning the mail address to which careful handling is not necessary, the mail header is not processed or the mail address is not deleted from the mail header. Accordingly, a recipient of the electronic mail can judge from the mail header to which related parties the same electronic mail is transmitted. Thus, convenience is not reduced.

The transmitting section 5 transmits the electronic mail to an upstream mail server (MTA: mail transfer agent) in accordance with the envelope information and the mail data inputted from the individually transmitting section 42, the individual transmission judging section 41, and the password notifying section 33. Here, the communications between the transmitting section 5 and the mail server is performed by using the SMTP.

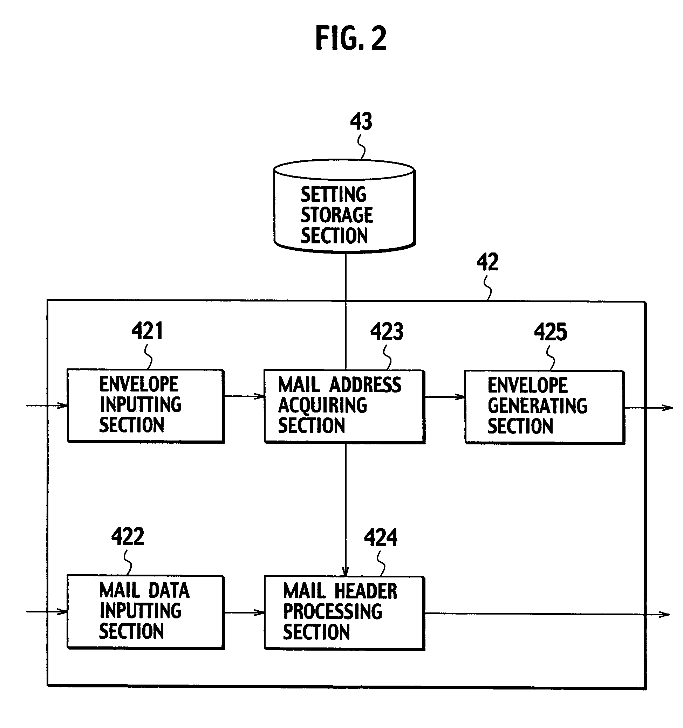

Next, details of the individually transmitting section 42 will be described by using the drawing. Fig. 2 is a block diagram showing the configuration of the individually transmitting section 42. The individually transmitting section 42 includes an envelope inputting section 421, a mail data inputting section 422, a mail address acquiring section 423, a mail header processing section 424, and an envelope generating section 425.

The envelope information and the mail data of the electronic mail judged to be targeted for the individual transmission by the individual transmission judging section 41 are respectively inputted to the envelope inputting section 421 and to the mail data inputting section 422, and are stored in the respective memories included therein.

The mail address acquiring section 423 acquires the mail addresses one by one from the destination information (RCPT TO) included in the envelope information stored in the memory of the envelope inputting section 421, and outputs them to the mail header processing section 424 and the envelope generating section 425. The processes performed by the mail header processing section 424 and the envelope generating section 425 to be described below are individually carried out for each of the mail addresses acquired by the mail address acquiring section 423.

The mail header processing section 424 reads the mail data from the mail data inputting section 422, deletes unnecessary mail addresses, other than the mail address acquired by the mail address acquiring section 423, from the To field and the Cc field of the mail header included in the mail data, and stores it in a memory included in the mail header processing section 424.

The envelope generating section 425 generates the envelope information so as to allow the mail data to be delivered to the mail address acquired by the mail address acquiring section 423 and stores the envelope information in a memory included in the envelope generating section 425.

The transmitting section 5 receives the envelope information from the envelope generating section 425, receives the mail data corresponding to the inputted envelope information from the mail header processing section 424, and then delivers them to the upstream mail server. In this way, the mail addresses other than the destination mail address are deleted from the mail header of the electronic mail to be delivered. Accordingly, leakages of the mail addresses of others can be prevented.

Meanwhile, the mail address acquiring section 423 refers to the setting storage section 43 to acquire the exempt mail addresses and prevent the mail header processing section 424 from deleting it from the mail header. Here, when there are multiple exempt mail addresses in the destination information (RCPT TO), the mail address acquiring section 423 generates the envelope information including all of the exempt mail addresses instead of generating the envelope information individually for each of the exempt mail addresses, and transmits it collectively. In this way, a load on the server at the time of delivering the electronic mail can be reduced.

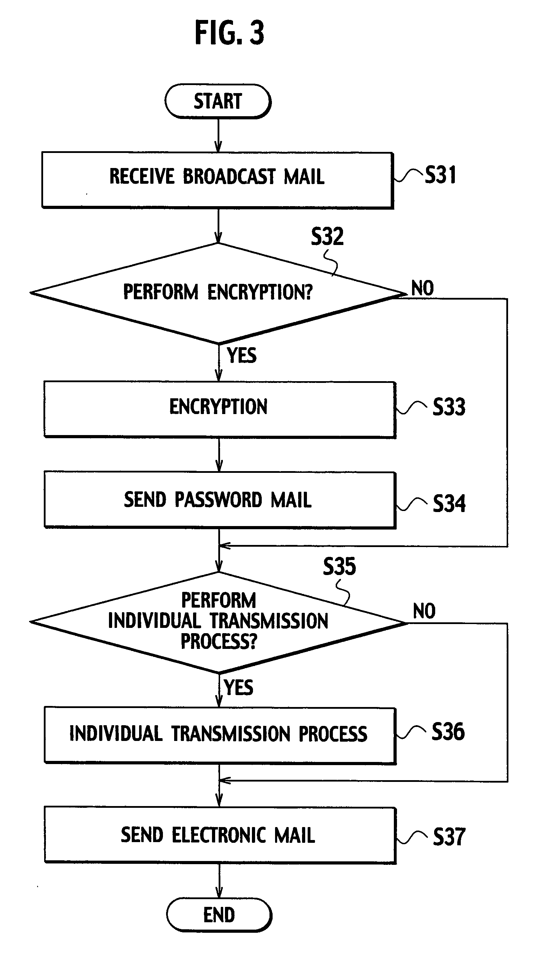

Fig. 3 is a flowchart showing procedures of the electronic mail delivery system 1 in this embodiment.

The electronic mail transmitted from the client is received by the receiving section 2 (S31). When a file is attached to the received electronic mail, the encryption judging section 31 judges whether or not to encrypt the attached file (S32). When no file is attached thereto, the process goes to S35. Even if the file is attached, when the given field is included in the mail header or when the predetermined dummy mail address is included in the delivery destination, the encrypting section 32 moves the process to S35 without encrypting the attached file.

Subsequently, the attached file is encrypted by the encrypting section 32 (S33). The password notifying section 33 transmits the password for decoding the encryption to all the delivery destinations individually as the password notification mail (S34).

Subsequently, the individual transmission judging section 41 judges whether or not to perform the individual transmission process (S35). The judgment by the individual transmission judging section 41 as to whether or not to perform the individual transmission process is determined depending on whether or not the given field is included in the mail header or whether or not the predetermined dummy mail address is included in the delivery destination. The process goes to S37 when the individual transmission process is not performed. Then, the transmitting section 5 delivers the mail data to the upstream mail server on the basis of the received envelope information.

In the case of performing the individual transmission process, the individually transmitting section 42 copies the mail data for each of the destination mail addresses in the destination information (RCPT TO) included in the envelope information. Then, the individually transmitting section 42 deletes the mail addresses other than the relevant destination mail address from the To field and the Cc field of the mail header in the copied mail data, and generates the envelope information for delivering the mail data to the destination mail address (S36). The transmitting section 5 delivers the mail data to the upstream mail server on the basis of the envelope information generated for each of the destination mail addresses (S37).

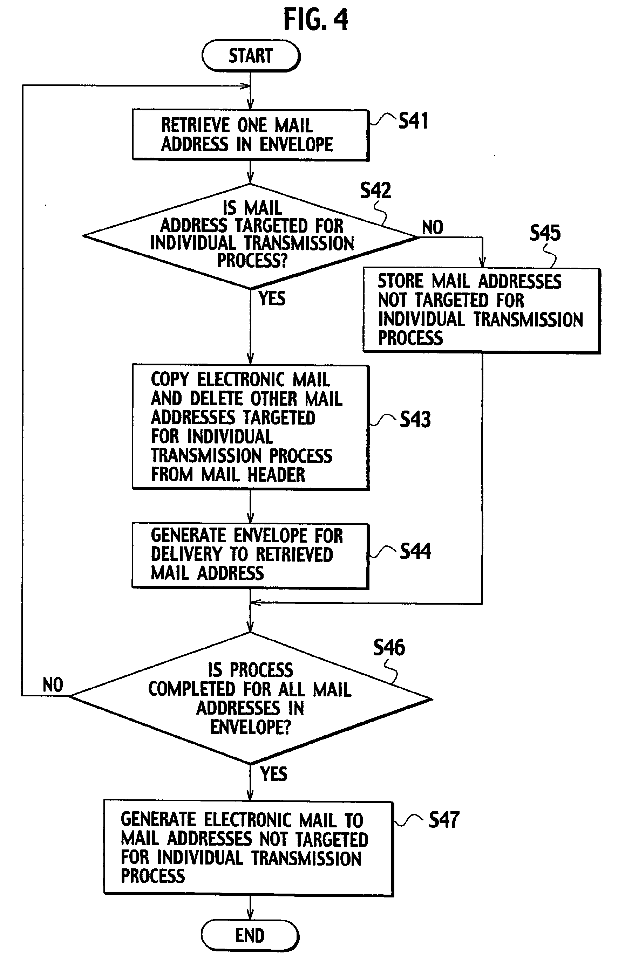

Next, the individual transmission process will be described in detail by using a flowchart. Fig. 4 is a flowchart showing the individual transmission process by the electronic mail delivery system 1 in this embodiment.

The envelope information of the electronic mail is inputted to the envelope inputting section 421 while the mail data are inputted to the mail data inputting section 422. Then, the mail addresses included in the destination information (RCPT TO) of the envelope information are acquired one by one by the mail address acquiring section 423 (S41).

The individual transmission judging section 41 judges whether or not the acquired mail address is targeted for the individual transmission process by referring to the setting storage section 43 (S42). When the acquired mail address is the mail address not targeted for the individual transmission process, the individual transmission judging section 41 stores the mail address in the memory included in the envelope generating section 425 (S45), and the process goes to S46 to acquire the next mail address.

When the acquired mail address is targeted for the individual transmission process, the individual transmission judging section 41 acquires the mail data from the mail data inputting section 422 and then the mail header processing section 424 deletes the mail addresses of others (the mail addresses other than the acquired mail address which are not the exempt mail addresses) included in the To field and the Cc field of the mail header (S43). Then, the envelope generating section 425 generates the envelope information including the destination information (RCPT TO) for the delivery to the acquired mail address (S44).

The process goes to S47 if the above-described process is completed for all the mail addresses in the destination information (RCPT TO) included in the envelope information. If any mail address to be processed still remains, the process returns to S41 in order to acquire the next mail address for processing (S46).

Since the electronic mail is transmitted to the exempt mail addresses collectively, the envelope generating section 425 generates the envelope information containing all the exempt mail addresses which are stored in the process in S45 (S47). Here, the mail data are transmitted to the exempt mail addresses without the mail header of the mail data being processed.

With the above processes, the mail data in which the mail addresses of others are deleted from the mail header and the envelope information for delivering the mail data individually are generated for each of the destination mail addresses. Thereby, it is possible to allow the transmitting section 5 to transmit the electronic mails individually to the upstream mail server.

Next, a manner of dividing the envelope information and processing the mail header by the electronic mail delivery system 1 in this embodiment will be described by using the drawings.

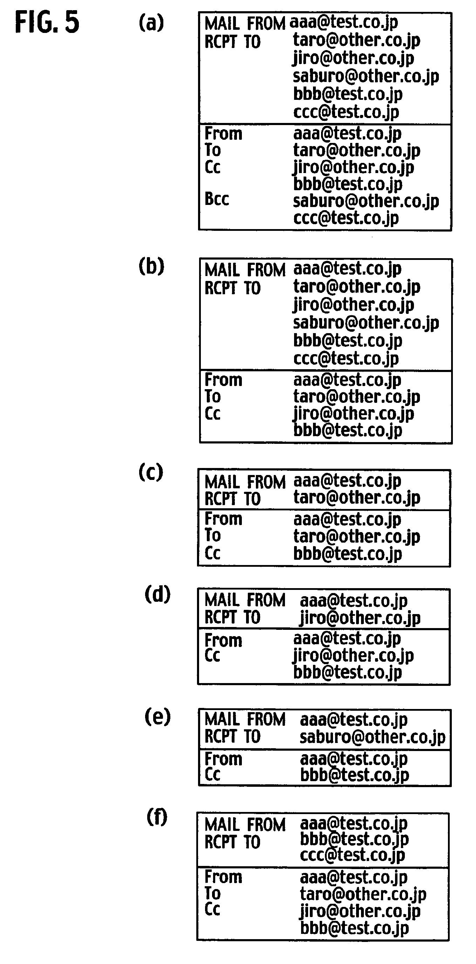

Figs. 5(a) to (f) are views showing the envelope information and part of the mail headers. An upper stage in each of the drawings indicates the envelope information while a lower stage indicates part of the mail header. The envelope information contains the sender information (MAIL FROM) and the destination information (RCPT TO), and values thereof are indicated at the right ends thereof, respectively. Meanwhile, a From field, the To field, the Cc field, and a Bcc field in the mail header are indicated on the lower stage of each of the drawings, and values of the respective fields are indicated at the right ends of the respective fields.

Fig. 5(a) shows the envelope information and part of the mail header generated when the client sends a broadcast mail. According to the mail header indicated in the drawing, a sender is aaa@test.co.jp, and five destinations of taro@other.co.jp, jiro@other.co.jp, bbb@test.co.jp, saburo@other.co.jp, and ccc@test.co.jp are specified as the destinations. Concerning the envelope information, the sender information (MAIL FROM) is aaa@test.co.jp while the destination information (RCPT TO) contains the aforementioned five mail addresses.

Fig. 5(b) shows the envelope information and part of the mail header received by the receiving section 2. The Bcc field is deleted when the client performs communications with the receiving section 2. However, since saburo@other.co.jp, and ccc@test.co.jp specified in the Bcc field are included in the envelope information, the mail data are also delivered to these mail addresses. The individually transmitting section 42 performs the individual transmission process on the basis of the envelope information and the mail header shown in Fig. 5(b). Here, one address having the domain of test.co.jp is assumed to be set up in the setting storage section 43 as the mail address not targeted for the individual transmission process. Hereinafter, a manner of acquiring the mail addresses one by one and processing the mail header by the mail address acquiring section 423 will be described.

The mail address acquiring section 423 acquires the mail address of taro@other.co.jp from the envelope information at the upper stage in Fig. 5(b) inputted to the envelope inputting section 421. The mail header processing section 424 copies the mail data containing the information at the lower stage in Fig. 5(b) inputted to the mail data inputting section 422, and deletes the mail addresses which are other than the taro@other.co.jp and have any domains other than test.co.jp from the To field and the Cc field of the mail header indicated at the lower stage in Fig. 5(b). By processing the mail header as described above, the mail header is formed into one as shown at the lower stage in Fig. 5(c). The mail header shown at the lower stage in Fig. 5(c) is equivalent to the mail header shown at the lower stage in Fig. 5(b) in which jiro@other.co.jp is deleted from the Cc field thereof. Here, ccc@test.co.jp corresponds to the mail address not to be divided which is set up in the setting storage section 43, and therefore is not deleted and remains in the Cc field. Meanwhile, the envelope information for delivery to the taro@other.co.jp is generated by the envelope generating section 425 and the generated envelope information is as shown at the upper stage in Fig. 5(c).

Similarly, the next address jiro@other.co.jp is acquired by the mail address acquiring section 423. Then, the envelope information and the mail header are generated as shown in Fig. 5(d). The envelope information and the mail header shown in Fig. 5(e) are obtained by acquiring and processing saburo@other.co.jp.

Fig. 5(f) shows the envelope information and the mail header for transmission to the mail addresses which are set up as the exempt mail addresses in the setting storage section 43. Here, bbb@test.co.jp and ccc@test.co.jp are processed as the exempt mail addresses. For the exempt mail address, the electronic mail is transmitted as similar to the existing method. Accordingly, the mail header is the same as the one shown at the lower stage in Fig. 5(b) and the destination information (RCPT TO) at the upper stage in Fig. 5(f) is equivalent to the one obtained by deleting the mail address, on which the individual transmission process has been performed, from the one shown in Fig. 5(b).

Thus, according to this embodiment, the mail address acquiring section 423 configured to acquire the destination mail addresses one by one from the received envelope information, the mail header processing section 424 configured to delete the destination mail addresses other than the acquired mail address from the mail header, and the envelope generating section 425 configured to generate the envelope information for delivering the mail data to the acquired mail address are provided. Thereby, it is possible to transmit the mail data individually to the respective destination mail addresses included in the envelope information and to delete the destination mail addresses other than the delivery destination mail address from the mail header of the mail data to be transmitted. Accordingly, a broadcast mail can be sent without the mail addresses of others being leaked.

According to this embodiment, by storing the deletion-exempt mail addresses in the setting storage section 43, it is possible to deliver the electronic mail without deleting specific mail addresses such as in-house mail addresses from the mail header. Thus, the electronic mail can be transmitted to the mail addresses containing the destination mail addresses such as in-house mail addresses for which careful handling is not necessary, so that the recipient can judge to which related parties the broadcast mail has been sent.

According to this embodiment, by storing the processing-exempt mail addresses in the setting storage section 43, the electronic mail can be delivered without the mail header of specific mail addresses being processed, the specific mail addresses being such as in-house destinations which are in no danger of leakages of personal information. Thus, it is possible to judge to whom the electronic mail has been sent, thereby not reducing convenience.

According to this embodiment, by transmitting the mail data collectively to the destination mail addresses to which the electronic mail is delivered without the mail header being processed, a load at the time of delivering the mail data can be reduced.

According to this embodiment, as the client and the receiving section 2 perform communications by use of the general electronic mail transmission protocol (SMTP), the user can use a mailer usually used by the user. Hence it is possible to utilize the electronic mail delivery system 1 easily.

According to this embodiment, the individual transmission judging section 41 judges whether or not the given field is included in the mail header or whether the predetermined mail address is included in the destinations, and the individual delivery process is not performed when any of these conditions is applicable. Hence the user can control whether to execute the individual delivery process for each of the electronic mails.

## Claims

1. An electronic mail delivery system **characterized by** comprising:
a first receiving section for receiving an envelope containing destination mail addresses and causing a first storage section to store the envelope;
a second receiving section for receiving mail data containing a mail header corresponding to the envelope and causing a second storage section to store the data;
an acquiring section for acquiring each of the destination mail addresses contained in the envelope from the first storage section;
a processing section for deleting, for each of the destination mail addresses acquired by the acquiring section, the destination mail addresses except the each of the destination mail addresses from the mail header of the mail data read from the second storage section, and causing a third storage section to store the mail data;
a generating section for generating an envelope containing each of the destination mail addresses acquired by the acquiring section so as to deliver the mail data individually to the each of the destination mail addresses, and causing a fourth storage section to store the envelope; and
a delivering section for reading the envelope from the fourth storage section as well as reading, from the third storage section, the mail data corresponding to the each of the destination mail addresses contained in the envelope, and delivering the mail data on the basis of the envelope.

2. The electronic mail delivery system according to claim 1, **characterized by** further comprising:
a fifth storage section for storing, as a deletion-exempt mail address, a deletion-exempt mail address from the mail header of the mail data,
**characterized in that** the processing section deletes, from the mail header, a destination mail address other than the destination mail address acquired by the acquiring section and not corresponding to the deletion-exempt mail address read from the fifth storage section.

3. The electronic mail delivery system according to any one of claims 1 and 2, **characterized by** further comprising:
a sixth storage section for storing, as a processing-exempt mail address, a mail address to which the mail data are delivered without the mail header of the mail data being processed,
**characterized in that** the processing section does not process the mail header of the mail data read from the second storage section in the case where the destination mail address acquired by the acquiring section corresponds to the processing-exempt mail address which is read from the sixth storage section.

4. The electronic mail delivery system according to claim 3,
**characterized in that** the generating section generates the envelope containing the destination mail addresses collectively as delivery destinations in the case where the destination mail address acquired by the acquiring section corresponds to the processing-exempt mail addresses.

5. An electronic mail delivery program **characterized by** causing a computer to execute the steps of:
receiving an envelope containing destination mail addresses and causing a first storage section to store the envelope;
receiving mail data containing a mail header corresponding to the envelope and causing a second storage section to store the data;
acquiring each of the destination mail addresses contained in the envelope from the first storage section;
deleting, for each of the destination mail addresses acquired in the step of acquiring the mail addresses, the destination mail addresses except the each of the destination mail addresses from the mail header of the mail data read from the second storage section and causing a third storage section to store the mail data;
generating an envelope containing each of the destination mail addresses acquired in the step of acquiring the mail addresses so as to deliver the mail data individually to the each of the destination mail addresses, and causing a fourth storage section to store the envelope; and
reading the envelope from the fourth storage section as well as reading, from the third storage section, the mail data corresponding to the each of the destination mail addresses contained in the envelope, and delivering the mail data on the basis of the envelope.

6. The electronic mail delivery program according to claim 5, **characterized by** further comprising the step of:
reading, from a fifth storage section, a deletion-exempt mail address that is a deletion-exempt mail address from the mail header of the mail data,
**characterized in that** the step of deleting from the mail header includes deleting, from the mail header, a destination mail address other than the destination mail address acquired in the step of acquiring the mail addresses and not corresponding to the deletion-exempt mail address.

7. The electronic mail delivery program according to any one of claims 5 and 6, **characterized by** further comprising the step of:
reading, from a sixth storage section, a processing-exempt mail address that is a mail address to which the mail data are delivered without the mail header of the mail data being processed,
**characterized in that** the step of deleting from the mail header includes not processing the mail header of the mail data read from the second storage section in the case where the destination mail address acquired in the step of acquiring the destination mail address corresponds to the processing-exempt mail address.

8. The electronic mail delivery program according to claim 7,
**characterized in that** the step of generating the envelope includes, in the case where the destination mail addresses acquired in the step of acquiring the mail addresses correspond to the processing-exempt mail addresses, generating the envelope collectively containing the destination mail addresses as delivery destinations.
